# EUROPÄISCHE PATENTSCHRIFT

(11) **EP 1 179 951 B1**
(45) Veröffentlichungstag und Bekanntmachung des Hinweises auf die Patenterteilung: **26.05.2010**
(21) Anmeldenummer: 01113449.1
(22) Anmeldetag: 02.06.2001
(51) Int. Cl.: H04M 3/487, H04M 15/00

(54) **Versteigerung von Rangfolgen**
Auction for the hierarchy of messages
Enchères pour la hiérarchie de messages

(30) Priorität: 10.08.2000 DE 10039130
(43) Veröffentlichungstag der Anmeldung: 13.02.2002
(73) Patentinhaber: Deutsche Telekom AG, 53113 Bonn (DE)
(72) Erfinder: Trinkel, Marian, 52372 Kreuzau OT Untermaubach (DE); Brenig, Heinrich-Helmut Dr., 53340 Meckenheim (DE)
(74) Vertreter: COHAUSZ DAWIDOWICZ HANNIG & SOZIEN

(56) Entgegenhaltungen:
- EP-A- 0 827 321
- WO-A-00/33163
- WO-A-00/38074
- WO-A-99/26388
- DE-A1- 4 039 970
- US-A- 5 448 625
- US-A- 5 848 397
- US-A- 5 974 398

## Beschreibung

Die vorliegende Erfindung betrifft ein Verfahren zur Organisation einer Liste von jeweils einem Anbieter zugeordneten Werbe- und/oder Anzeigentexten, die sich in einem Ansagetext darstellen und die einem Interessenten auf Abruf über ein Telephonnetz dargeboten werden. Die Erfindung betrifft gleichfalls ein System zur Durchführung des Verfahrens.

Derartige Verfahren sind hauptsächlich von graphisch dargebotener Werbung bekannt. Hier kann der Interessent alle Anzeigen auf einmal überblicken und sich auf die ihm wesentlich erscheinenden konzentrieren. In sehr rudimentärer Form ist die Darbietung einer größeren Anzahl von unterschiedlichen Informations- oder Werbehinweisen auch bei Telephonsystemen bekannt. Nachteil eines solchen in Sprachform dargebotenen Liste von Angeboten ist im Gegensatz zu den schriftlich vorliegenden Anzeigen oder Werbebannern, daß der anrufende Kunde mit einer langen Liste konfrontiert wird und sich auf höchstens die ersten drei Angebote der Liste konzentrieren kann, während er nicht bereit ist, sich die komplette Liste anzuhören. Die Rangfolge der Darbietung wirkt sich also stark auf die Akzeptanz und damit den Erfolg des Angebotes aus. Für den Anbieter von Waren oder Dienstleistungen ist es also interessant, ganz oben auf der Liste zu stehen.

Die Platzierung von Werbetexten anhand von Geldbeträgenangeboten ist z.B. aus den beiden Dokumenten WO 00/33163 und WO 00/38074 bekannt.

Aufgabe der Erfindung ist es, ein Verfahren zu schaffen, das dem Anbieter mit einfachen Mitteln die Möglichkeit eröffnet, sein Angebot an dem von ihm gewünschten Rang der Liste zu platzieren, Gleichzeitig ist es Aufgabe der Erfindung, ein System zur Umsetzung des Verfahrens zu schaffen.

Diese Aufgaben werden durch das Verfahren nach Anspruch 1 und das System nach Anspruch 5 gelöst.

Die zugrundeliegende Idee der Erfindung ist es, die Plätze einer solchen Liste nach ihrer Reihenfolge meistbietend zu verkaufen, um dem Anbieter die Möglichkeit zu geben, einen der für den Verkauf vorteilhaften ersten Plätze zu ergattern. Diese Idee ist gerade bei sich ständig aktualisierenden temporären Listen, wie bei täglich erscheinenden Zeitungsannoncen, interessant. In Praxis wird die Idee durch folgendes technische Verfahren realisiert:
An das Telephonnetz wird ein Server angeschlossen, der über eine Netzkennung anwählbar ist und auf dem ein kommunikationsfähiges Sprachmodul realisiert ist. Dieser Server registriert den vom Anbieter gewünschten und auf ein Aufzeichnungsmodul aufgesprochenen Werbe- oder Anzeigentext und bereitet diesen zur Darbietung an den Interessenten auf. Der Server registriert in einer besonderen Ausführungsform die Dauer der Verbindung, die zwischen ihm und dem anrufenden Anbieter besteht, um die anfallenden Telephonkosten zu ermitteln. Der Server setzt dann das Angebot des Anbieters in eine Liste mehrerer Werbe- oder Anzeigentexte, wobei er den Rang innerhalb der Liste nach der Dauer der Verbindung bestimmt. In einer anderen Ausführungsform kann der Anbieter den von ihm gebotenen Geldbetrag direkt nennen, wobei der Server wiederum den Rang in der Liste nach der Höhe des Betrages einrichtet.

Der Anbieter, der eine Anzeige in einer Telephonansage schalten möchte, ruft erfindungsgemäß beim Service- Provider als Betreuer des für die Umsetzung des Verfahrens nötigen Servers an, wobei der Anruf kostenpflichtig ist und über den Netzbetreiber entsprechend seiner Dauer abgerechnet wird. Der Service-Provider, bzw. das auf dem Server laufende Sprachmodul gibt dem anrufenden Anbieter als seinem Kunden die Möglichkeit, einen Anzeigetext in einen Speicher zu diktieren. Dabei entscheidet, wie oben dargelegt, die Länge des Anrufes, also die Dauer der Verbindung und damit letztendlich die für den Anruf zu zahlende Telephongebühr, über den Rang in der Liste aller Anbieter für diese Waren oder Dienstleistungen. Idealerweise bekommt der Anbieter während des Gespräches laufend den mittlerweile erreichten Listenplatz mitgeteilt. Auf diese Weise kann der Anbieter die Zeit seines Gespräches so in die Länge ziehen, bis er den gewünschten Platz, zumindest für eine gewisse Zeit, erhält. Vorteilhafterweise werden dem Anrufer gleichfalls die anfallenden Telephonkosten mitgeteilt. Die Einzelansagen werden vom Kunden selber generiert, bevor sie vom Provider ins Netz gestellt werden. Anwendung kann dieses System in einem sprachlich dargebotenen Branchentelephonbuch oder in einem sprachlichen Anzeigenteil finden, der wie der Anzeigenteil einer Zeitung organisiert ist. Auf den Anruf hin wird der Interessent mit der Liste von Angeboten konfrontiert, die auf seinen Bedarf zugeschnitten sind.

Es ist vorteilhaft, die Gesprächspausen, die ja letztendlich nur zum Zwecke der Ersteigerung eines guten Listenplatzes dienen, mittels eines Fiterprogrammes aus dem Gespräch heraus zu schneiden, um einen flüssigen Ansagetext zu erhalten.

Um dem Anbieter trotz des drohenden Platzverlustes durch eine mögliche Übersteigerung dennoch eine gewisse Sicherheit für den ersteigerten Platz zu bieten, ist es vorteilhaft, zusammen mit dem Listenplatz eine Dauer zuzusichern, für die der Listenplatz besteht, bevor er von einem anderen Anrufer überboten werden kann. Durch diese Maßnahme wird das Verfahren für den Kunden kalkulierbarer und damit attraktiver. Vorteilhaft ist es auch, die Angebote in viele und entsprechend differenzierte Kategorien aufzuteilen, um eine Vielzahl von Listen mit attraktiven Top-Plätzen zu schaffen.

Über diese Erfindung kann der bislang schwache Marktbedarf an der Dienstleistung der telephonisch abrufbaren Annonce gesteigert werden. Dabei läßt sich die Erfindung kostengünstig umsetzen, da die dafür nötigen Mittel vorhanden sind.

## Patentansprüche

1. Verfahren zur Organisation einer Liste von jeweils einem Anbieter zugeordneten Werbe- und/oder Anzeigentexten, die sich in einem Ansagetext darstellen und die einem Interessenten auf Abruf über ein Telephonnetz dargeboten werden, **dadurch gekennzeichnet, dass** ein Server an das Netz angeschlossen ist, der über eine Netzkennung anwählbar ist und auf dem ein kommunikationsfähiges Sprachmodul realisiert ist, daß der Server den vom Anbieter auf ein Aufzeichnungsmodul aufgesprochenen Werbe- oder Anzeigentext registriert und zur Darbietung an den Interessenten aufbereitet und daß der Server den Werbe- oder Anzeigentext in eine Liste mehrerer Werbe- oder Anzeigentexte setzt, wobei er die Position innerhalb der Liste nach der Dauer der Verbindung bestimmt, die zwischen dem Server und dem anrufenden Anbieter besteht.

2. Verfahren nach Anspruch 1, **dadurch gekennzeichnet, dass** dem Anbieter während der Verbindung die schon vorübergegangene Dauer der Verbindung und/oder die Kosten für die geschaffene Verbindung angezeigt, insbesondere angesagt wird.

3. Verfahren nach einem der vorherigen Ansprüche, **dadurch gekennzeichnet, dass** dem Anbieter während der Dauer der Verbindung der aktuelle Rang seines Textes innerhalb der Liste angezeigt, insbesondere angesagt wird.

4. Verfahren nach einem der vorherigen Ansprüche, **dadurch gekennzeichnet, dass** der Werbe- oder Anzeigentext vermittels eines Filterprogramms zu einem flüssigen Ansagetext komprimiert wird durch Herausschneiden von Gesprächspausen aus einem Gespräch.

5. System umfassend ein Datenleitungsnetz, mit einer Vielzahl angeschlossener Teilnehmer, die untereinander und mit an das Netz angeschlossenen Servern Sprachnachrichten austauschen, **gekennzeichnet durch** einen von einem Anbieter anwählbaren Server mit einem Sprachmodul, das zur Aufnahme von Sprachnachrichten des anrufenden Anbieters geeignet ist, wobei der Server eingerichtet ist, Texte der Sprachnachrichten in eine Liste mehrerer Anzeige- oder Werbetexte verschiedener Anbieter zu stellten, die einem interessierten Teilnehmer darbietbar ist und wobei der Server weiter eingerichtet ist, die Rangfolge der Texte innerhalb der Liste aufgrund der Dauer der Verbindung zwischen ihm und dem Anbieter zu erstellen.

6. System nach Anspruch 5, **dadurch gekennzeichnet, dass** es sich bei dem Datenleitungsnetz um ein Telephonnetz oder das Internet handelt.

7. System nach einem der Ansprüche 5 oder 6, **dadurch gekennzeichnet, dass** es sich bei den Sprachnachrichten um Anzeige- oder Werbetexte handelt,

## Claims

1. Method of organizing a list of advertising texts which are each assigned to a prospective seller, are presented in a recorded announcement and are recited to a prospective buyer on inquiry via a telephone network, **characterized in that** a server is connected to the network which can be dialled via a network identifier and on which a communicable speech module is realized, **in that** the server records the advertising text dictated by the prospective seller on a recording module and edits it for recital to the prospective buyer, and **in that** the server puts the advertising text in a list of a plurality of advertising texts, determining its position within the list in accordance with the duration of the connection between the server and the prospective seller making the call.

2. Method according to Claim 1, **characterized in that** the elapsed duration of the connection and/or charges for the connection are indicated, and in particular announced, to the prospective seller during the connection.

3. Method according to either of the preceding claims, **characterized in that** the current ranking of the prospective seller's text within the list is indicated, and in particular announced, to the prospective seller during the course of the connection.

4. Method according to any one of the preceding claims, **characterized in that** the advertising text is compressed by means of a filter programme into a fluent message text by the excision of conversational pauses.

5. System comprising a data line network with a large number of connected subscribers exchanging speech messages with each other and with servers connected to the network, **characterized by** a server which can be dialled by a prospective seller and has a speech module capable of recording the speech messages of the prospective seller making the call, the server being set up to place texts of the speech messages in a list of a plurality of advertising texts of different prospective sellers that can be recited to an interested subscriber, and the server also being set up to establish the order of precedence of the texts within the list on the basis of the duration of the connection between it and the prospective seller.

6. System according to Claim 5, **characterized in that** the data line network is a telephone network or the Internet.

7. System according to either of Claims 5 and 6, **characterized in that** the speech messages are advertising texts.

## Revendications

1. Procédé permettant l'organisation d'une liste de textes publicitaires et/ou textes d'annonces, affectés à chaque fois à un fournisseur, qui se présentent sous forme d'un texte d'annonce vocal et qui sont proposés à une personne intéressée sur appel par le biais d'un réseau téléphonique, **caractérisé en ce qu'**un serveur est relié au réseau, lequel serveur pouvant être appelé par le biais d'un code de réseau et un module vocal capable de communiquer étant réalisé sur ledit serveur, **en ce que** le serveur inscrit le texte publicitaire ou le texte d'annonces prononcé par le fournisseur dans un module d'enregistrement et le prépare pour la présentation à la personne intéressée et
**en ce que** le serveur met le texte publicitaire ou le texte d'annonces dans une liste de plusieurs textes publicitaires ou textes d'annonces, le serveur déterminant la position à l'intérieur de la liste selon la durée de la liaison qui existe entre le serveur et le fournisseur appelant.

2. Procédé selon la revendication 1, **caractérisé en ce que** la durée déjà écoulée de la liaison et/ou les coûts pour la liaison réalisée sont affichés, en particulier annoncés vocalement au fournisseur durant la liaison.

3. Procédé selon l'une quelconque des revendications précédentes, **caractérisé en ce que** le rang actuel de son texte à l'intérieur de la liste est affiché, en particulier annoncé vocalement au fournisseur durant la liaison.

4. Procédé selon l'une quelconque des revendications précédentes, **caractérisé en ce que** le texte publicitaire ou le texte d'annonces est comprimé en un texte d'annonce vocal fluide au moyen d'un programme de filtrage supprimant les pauses d'une conversation.

5. Système comprenant un réseau de lignes de données, comprenant une pluralité de participants qui échangent entre eux et avec des serveurs branchés au réseau des messages vocaux, **caractérisé par** un serveur, appelable par un fournisseur et équipé d'un module vocal, qui est approprié pour enregistrer des messages vocaux du fournisseur appelant, le serveur étant conçu pour mettre des textes des messages vocaux dans une liste de plusieurs textes d'annonces ou textes publicitaires de différents fournisseurs qui peut être présentée à un participant intéressé et le serveur étant en outre conçu pour établir la hiérarchie des textes dans la liste sur la base de la durée de la liaison entre le serveur et le fournisseur.

6. Système selon la revendication 5, **caractérisé en ce que** le réseau de lignes de données est un réseau téléphonique ou l'Internet.

7. Système selon une des revendications 5 ou 6, **caractérisé en ce que** les messages vocaux sont des textes d'annonces ou des textes publicitaires.
